(19) **Europäisches Patentamt**
**European Patent Office**
**Office européen des brevets**

(11) **EP 4 752 599 A1**

(12) **DEMANDE DE BREVET EUROPEEN**

(43) Date de publication:
**03.06.2026 Bulletin 2026/23**

(51) Classification Internationale des Brevets (IPC):
**G01S 13/44** (2006.01)  **G01S 7/292** (2006.01)
**G01S 13/524** (2006.01)

(21) Numéro de dépôt: **25220125.6**

(22) Date de dépôt: **02.12.2025**

(52) Classification Coopérative des Brevets (CPC):
**G01S 13/44; G01S 7/2927; G01S 13/5246**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **02.12.2024 FR 2413288**

(71) Demandeur: **THALES**
**92190 Meudon (FR)**

(72) Inventeurs:
• **GILLIOT, Adrien**
**33700 MERIGNAC (FR)**
• **VEYRAC, Yoan**
**33700 MÉRIGNAC (FR)**
• **CORRETJA, Vincent**
**33700 MÉRIGNAC (FR)**

(74) Mandataire: **Lavoix**
**2, place d'Estienne d'Orves**
**75441 Paris Cedex 09 (FR)**

(54) **PROCÉDÉ AMÉLIORÉ DE DÉTECTION DE CIBLE DU TYPE À TAUX DE FAUSSE ALARME CONSTANT POUR UN SYSTÈME DE DÉTECTION MULTIVOIES**

(57) Procédé (100), mis en œuvre par ordinateur, de détection de cible (C) du type à taux de fausse alarme constant pour un système de détection multivoies, caractérisé en ce que, en considérant une période d'observation courte pour que toute cible puisse être considérée comme immobile, pour chaque pas d'échantillonnage (j) selon une direction en distance (D) du système de détection multivoies, un test de détection est réalisé sur une séquence de signaux hybrides selon une direction en récurrence du système de détection multivoies, la séquence couvrant la période d'observation et chaque signal hybride ($S_{\Sigma G}$) associant un signal de voie somme ($s_{\Sigma,i}$) et un signal d'écartométrie ($\hat{G}_i$) pour chaque pas d'échantillonnage (i) selon la direction en récurrence, le procédé générant une détection de cible lorsque le test de détection est vérifié.

FIG.2

EP 4 752 599 A1

**Description**

L'invention a pour domaine celui des procédés de détection de cible pour des systèmes de détection multivoies du type radar ou sonar.

Un procédé de détection de cible délivre à chaque instant une liste de détections ou « plots ». Des procédés en aval de la détection permettent ensuite de corréler les plots d'un instant à l'autre pour ouvrir, mettre à jour ou fermer des pistes. Chaque piste est finalement analysée pour déterminer s'il s'agit d'une cible d'intérêt.

On connait des procédés de détection de cible à taux de fausse alarme constant - TFAC, pour des systèmes de détection multivoies.

Par exemple, dans une antenne bi-voie, l'antenne physique est « découpée » en deux sous-antennes, préférentiellement de même dimension, chaque sous-antenne étant associée à une électronique permettant de numériser le signal qu'elle reçoit.

La détection d'une cible s'effectue alors à partir du signal complexe issu de la voie somme, c'est-à-dire résultant de la sommation des signaux numérisés complexes reçus par chacune des deux sous-antennes :

$$s_\Sigma = s_1 + s_2$$

Plus précisément, pour une distance au radar donnée, on considère une séquence temporelle de N signaux sur la voie somme correspondant aux échos collectés au cours de N récurrences successives :

$$S_\Sigma = [s_{\Sigma 1}, \dots, s_{\Sigma i}, \dots, s_{\Sigma N}]^T, \quad S_\Sigma \in \mathbb{C}$$

où i est un entier entre 1 et N.

Lorsque le système de détection utilise des fréquences différentes d'une récurrence à l'autre, le traitement de détection TFAC s'appuie sur un test de détection $T_1$ comparant à un seuil $S_1$, la somme des puissances des signaux sur la voie somme à chaque instant :

$$T_1 : \sum_{i=1}^{N} |s_{\Sigma i}|^2 \gtrless S_1$$

Lorsqu'une même fréquence est utilisée d'une récurrence à l'autre, le traitement de détection TFAC s'appuie sur un test de détection $T_2$ comparant à un second seuil $S_2$, le module au carré de la somme des signaux sur la voie somme à chaque instant à un déphasage prêt :

$$T_2 : \left| \sum_{i=1}^{N} S_{\Sigma i} . e^{\frac{-j2\pi ki}{N}} \right|^2 \gtrless S_2, k \in [0; N-1]$$

On reconnait dans cette dernière équation l'expression d'une transformée de fourrier.

Lorsque le test de détection est vérifié, le traitement de détection crée un « plot » (ou détection).

Ce plot est caractérisé par une position de la cible en gisement, en site et en distance par rapport au système de détection.

Le traitement de détection TFAC procède à la détection (ou pré-détection dans certains cas) en « temps court », c'est-à-dire sur un horizon temporel de l'ordre de la dizaine à la centaine de millisecondes, correspondant au temps de passage usuel du lobe antennaire sur la cible dans le cas d'un radar à balayage progressif par exemple.

Les informations de position attachées à un plot sont obtenues compte tenu de la direction d'observation du système de détection au moment de l'acquisition des échos ayant conduit à la vérification du test de détection.

Le lobe principal d'un système de détection ayant une certaine ouverture (généralement définie à -3 dB), les informations de position d'un plot ont une précision sensiblement égale à la moitié de l'ouverture du lobe principal du système de détection.

Par ailleurs et de manière totalement indépendante du traitement de détection, la majorité des systèmes de détection connus procèdent à une estimation fine de la direction d'arrivée de l'onde sur le système de détection par un traitement d'écartométrie multivoies (dénommé « radar monopulse » en anglais).

Pour le cas simple d'un système bi-voie, un traitement d'écartométrie possible consiste à combiner le signal sur la voie somme ($s_\Sigma = s_1 + s_2$) et le signal sur la voie différence ($s_\Delta = s_1 - s_2$) selon la relation :

$$S_E = \frac{<s_\Sigma \, , \, j.s_\Delta >}{|s_\Sigma|^2}$$

L'expression dans laquelle le signal d'écartométrie $S_E$ est défini comme le produit scalaire du signal sur la voie somme par le signal sur la voie différence déphasé de $\frac{\pi}{2}$.

On montre alors que :

$$S_E = -\tan\left(\frac{\pi e}{\lambda} sin(G)\right)$$

Avec e, la distance entre les centres de phase des première et seconde sous-antennes ; $\lambda$, la longueur d'onde de la fréquence porteuse de l'écho reçu ; et $G$, l'angle d'arrivée de l'écho évalué par rapport à la direction normale au plan de l'antenne dans un plan défini par la direction normale au plan de l'antenne et la direction passant par les centres de phase des première et seconde sous-antennes.

Pour de petits angles d'arrivée $G$, on peut alors estimer l'angle d'arrivée de l'écho selon la relation suivante :

$$\hat{G} = \frac{\lambda}{\pi e} . \, \mathrm{atan}(-S_E)$$

Lorsque le plan de l'antenne est disposé horizontalement, l'angle d'arrivée G est l'angle de gisement et lorsque le plan antennaire est disposé verticalement, l'angle G correspond à l'angle de site.

Dit autrement, avec par exemple une antenne découpée en quatre sous-antennes réparties à la fois le long d'une direction horizontale et d'une direction verticale, il est possible de mesurer simultanément l'angle de gisement et de l'angle de site de la direction d'arrivée d'un signal.

Ainsi, le système de détection multivoies comporte un module adapté pour déterminer, pour chaque écho d'une succession de N échos, un angle d'arrivée, $\hat{G}_i$.

Cette information angulaire est transmise à un module dit d'habillage des plots, en aval du module réalisant le traitement de détection TFAC et générant les plots. Le module d'habillage est adapté pour associer un angle d'arrivée à chaque plot identifié en sortie du module TFAC.

Le module d'habillage vient donc compléter les informations de position d'un plot avec une information d'angle d'arrivée. Cela permet d'affiner les informations de position angulaires du plot telles que déterminées par le module TFAC.

Ainsi, selon l'état de la technique, la mesure d'écartométrie n'est pas prise en compte dans le traitement de détection TFAC.

Pourtant, la mesure d'écartométrie est porteuse d'une information qu'il serait souhaitable d'utiliser pour la détection de cible en tant que telle.

Pour cela, le document US 2010/066597 A1 divulgue un procédé de détection de cible du type à taux de fausse alarme constant - TFAC pour un système de détection multivoies. Ce procédé, en considérant une période d'observation suffisamment courte pour que toute cible puisse être considérée comme immobile, met en œuvre, pour chaque pas d'échantillonnage selon une direction en distance du système de détection multivoies, un test de détection sur une séquence de signaux hybrides selon une direction en récurrence du système de détection multivoies, la séquence de signaux hybrides couvrant la période d'observation et chaque signal hybride associant un signal de voie somme et un signal d'écartométrie pour chaque pas d'échantillonnage (i) selon la direction en récurrence, le procédé générant une détection de cible lorsque le test de détection est vérifié.

La présente invention a par conséquent pour but d'améliorer le procédé précédent.

Pour cela l'invention a pour objet un procédé de détection de cible du type à taux de fausse alarme constant - TFAC, un système de détection multivoies et un programme d'ordinateur selon les revendications annexées.

L'invention et ses avantages seront mieux compris à la lecture de la description détaillée qui va suivre d'un mode de réalisation particulier, donnée uniquement à titre d'exemple non limitatif, cette description étant faite en se référant aux dessins annexés sur lesquels :

- La figure 1 est une représentation schématique de la situation opérationnelle dans laquelle un lobe principal d'un système radar multivoies balaye un domaine d'intérêt autour d'une direction d'intérêt ;
- La figure 2 est une représentation schématique sous forme de blocs d'un mode de réalisation préféré du procédé selon l'invention ;
- La figure 3 présentes différentes images obtenues au cours de la mise en œuvre du procédé de la figure 2.

Le procédé selon l'invention est fondé sur l'utilisation de l'angle d'arrivée estimé $\hat{G}$, obtenu par écartométrie, au sein même du traitement de détection TFAC, en plus du signal issu de la voie somme.

L'invention porte par conséquent sur utilisation native, dès le traitement de détection de cible court terme, d'une séquence d'angles d'arrivée estimés $\{\hat{G}_i\}$, obtenue sur un temps d'observation $\Delta t \ll 1s$, au sein d'un traitement de détection TFAC hybride.

De manière générale, avec le procédé selon l'invention, la détection de cible est effectuée sur un signal hybride $S_{\Sigma G}$.

Le signal hybride $S_{\Sigma G}$ comporte des signaux élémentaires hybrides $s_{\Sigma Gi}$ pour une séquence de N récurrences (i étant un entier entre 1 et N).

Chaque signal élémentaire hybride $s_{\Sigma Gi}$ est bidimensionnel : il associe le signal sur la voie somme $s_{\Sigma i}$ et l'angle d'arrivée estimée $\hat{G}_i$.

On a par conséquent :

$$S_{\Sigma G} = \begin{bmatrix} s_{\Sigma G,1} \dots s_{\Sigma G,i} \dots s_{\Sigma G,N} \end{bmatrix}^T = \begin{bmatrix} s_{\Sigma,1} & \dots & s_{\Sigma,i} \dots & s_{\Sigma,N} \\ \hat{G}_1 & \dots & \hat{G}_i \dots & \hat{G}_N \end{bmatrix}^T$$

Dans un mode de réalisation préféré mettant en œuvre un radar à balayage, la séquence de N récurrences est obtenue sur un intervalle temporel d'observation $\Delta t$ qui correspond au temps de balayage d'un azimut d'intérêt $Az$ par le lobe principal du diagramme de l'antenne du système radar. Le pas d'échantillonnage temporel (ou pas en récurrence) est typiquement de 1 ms. Le nombre N de signaux dans la séquence est typiquement égal à 10. Ainsi la période d'observation $\Delta t$ est typiquement de 10 ms.

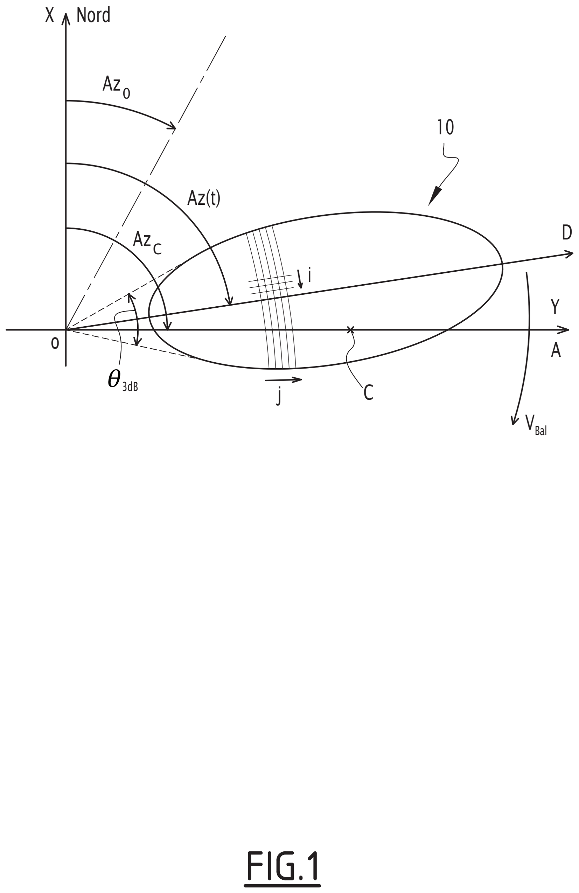

Comme illustré sur la figure 1, le lobe principal 10 est dirigé selon une direction de pointage D. Il balaie un plan horizontal défini par un repère XY centré au point O où est située l'antenne radar. La direction X coïncide par exemple avec le Nord. le lobe principal 10 balaye le plan XY avec une vitesse de balayage $V_{Bal}$.

Le diagramme de l'antenne, limité à son lobe principal pour simplifier la description, présente une largeur angulaire à -3dB, notée $\theta_{3dB}$.

Une direction d'intérêt A (par exemple d'azimut 90° dans l'exemple de la figure 1) est alors couverte par le lobe principal 10 de l'antenne radar durant la période d'observation $\Delta t$.

On a ainsi le jeu d'équations étendues suivant :

$$Az(t) = Az_0 + V_{Bal}.t$$

$$0 \leq t < \Delta t, \; \Delta t \ll 1s$$

$$V_{Bal}.\Delta t \approx \theta_{3dB}$$

Avec $Az(t)$, l'azimut de la direction de pointage D de l'antenne à l'instant $t$ ; $Az_0$, un azimut du pointage de l'antenne à $t = 0s$ ; $\Delta t$, le temps de balayage sur un angle de $\theta_{3dB}$.

Dans le cas de la mise en œuvre d'un radar fixe, l'antenne radar observe dans une direction de pointage fixe, sans balayage ($V_{Bal} = 0 \, rad/s$).

On a alors le jeu d'équations réduites suivant :

$$Az(t) = Az_0$$

$$0 \leq t < \Delta t, \; \Delta t \ll 1s$$

En faisant, dans un premier temps, l'hypothèse $H_0$ de présence d'une cible C le long de la direction d'intérêt A (plus précisément d'une cible lointaine, de faible vitesse et de rapport signal sur bruit - SNR suffisant), on peut alors considérer l'azimut apparent de la cible, $Az_C$, comme constant au cours du temps d'observation $\Delta t$.

La séquence d'angle de gisement estimés $\{\hat{G}_i\}_{i \in [1,N]}$ peut alors se modéliser de la manière suivante :

$$\hat{G}_i = Az_C - Az_0 - V_{Bal}.\frac{i-1}{N-1}.\Delta t + u_i$$

Avec : $Az_C$, l'azimut de la cible ; et, $u_i$, un bruit sur la mesure de l'angle d'arrivée. Le bruit de mesure $u_i$ peut être

décrit par une distribution normale $\mathcal{N}$ de valeur moyenne nulle et d'écart type $\sigma_E^2$ :

$$u_i \sim \mathcal{N}\left(0, \sigma_E^2(SNR_C)\right)$$

L'écart type $\sigma_E^2$ dépend du rapport signal sur bruit de la cible $SNR_C$ : il est réduit si la SNR de la cible est élevée, et augmente lorsque la SNR de la cible décroit et se vient progressivement se noyer dans le bruit de fond.

En faisant, dans un second temps, l'hypothèse $H_1$ de l'absence de cible le long de la direction d'intérêt A, des bruits, comme le bruit de fond des échos de la surface de la mer (aussi dénommé « fouillis ») ou le bruit thermique dans les circuits de réception de l'antenne, engendrent une séquence d'angles de gisement estimés $\{\hat{G}_i\}_{i \in [1,N]}$.

Lorsque le radar opère avec un changement de fréquence porteuse d'une récurrence à l'autre sur le temps d'observation $\Delta t$, les observations sont mutuellement indépendantes et la séquence d'angles de gisement estimés $\{\hat{G}_i\}_{i \in [1,N]}$ est aléatoire.

On peut alors la modéliser par une distribution normale $\mathcal{N}$ de valeur moyenne nulle et d'écart type $\sigma_E^2$ pour un rapport signal sur bruit de la cible nul ($SNR_C = 0$) :

$$\hat{G}_i \sim \mathcal{N}\left(0, \sigma_E^2(0)\right)$$

Dans le cas particulier d'échos de mer en haute résolution distance (métrique ou mieux), cette modélisation de la séquence aléatoire $\{\hat{G}_i\}_{i \in [1,N]}$ peut être affinée en tenant compte des caractéristiques observées du fouillis de mer. Par exemple, un front de vague pourra occasionnellement engendrer un écho de fouillis de mer ayant un angle d'arrivée quasiment fixe sur la durée d'observation $\Delta t$. Il peut alors devenir nécessaire de modéliser ces phénomènes pour concevoir un traitement de détection plus efficace.

Selon la théorie statistique générale des radars, le concepteur d'un radar cherche à construire le détecteur maximisant la probabilité de détection de la cible $P_D$, pour une probabilité de fausse alarme $P_{fa}$ contrainte.

Le lemme de Neyman-Pearson, connu de l'homme du métier, permet de construire un test de détection $T$ à partir d'un ratio de vraisemblance.

On construit ainsi le test de détection optimal $T_{\Sigma G}$ :

$$T_{\Sigma G} : \frac{\mathcal{L}(S_{\Sigma G}|H_0)}{\mathcal{L}(S_{\Sigma G}|H_1)} \gtrless S_H$$

Avec $\mathcal{L}(S_{\Sigma G}|H)$ la fonction de vraisemblance de la séquence d'observation $S_{\Sigma G}$ sous l'hypothèse $H$.

Le test est optimal au sens où il maximise la puissance, au sens statistique de ce terme, c'est-à-dire maximisant la probabilité $P_D$ sous contrainte de la probabilité $P_{fa}$.

Un plot sera généré à partir des observations $S_{\Sigma G}$ dès que le test sera validé, c'est-à-dire le rapport des deux fonctions de vraisemblance supérieur au seuil $S_H$ convenablement choisi.

Ce test de détection optimal est ensuite travaillé, notamment en exprimant les fonctions de vraisemblance en fonction des modélisations faites, jusqu'à faire apparaitre une expression suffisamment simple correspondant à un traitement de détection qui reste optimal, mais qui est simplifié.

On introduit ensuite des approximations sur ce test optimal simplifié pour pouvoir l'implémenter. Le test effectivement appliqué devient alors sous-optimal, mais il correspond au test optimal et au test optimal simplifié.

Cela conduit à la mise en évidence de nouveaux traitements de détection TFAC hybrides au sens où ils s'appuient sur des tests combinant les signaux élémentaires $\{S_{\Sigma i}\}$ issus de la voie somme et les signaux d'écartométrie multivoie $\{\hat{G}_i\}$.

Dans le cas général d'observations mutuellement indépendantes, on peut par exemple réécrire la fonction de vraisemblance de la manière suivante :

$$\mathcal{L}(S_{\Sigma G}|H) = \prod_{i=1}^{N} p\left(s_{\Sigma G,i}|H\right)$$

Avec $p(s_{\Sigma G,i}|H)$ la densité de probabilité de la variable aléatoire $s_{\Sigma G,i}$ sous l'hypothèse $H$. L'expression de cette densité de probabilité dépend des choix de modélisation effectués pour les échos provenant d'une cible et ceux provenant du bruit.

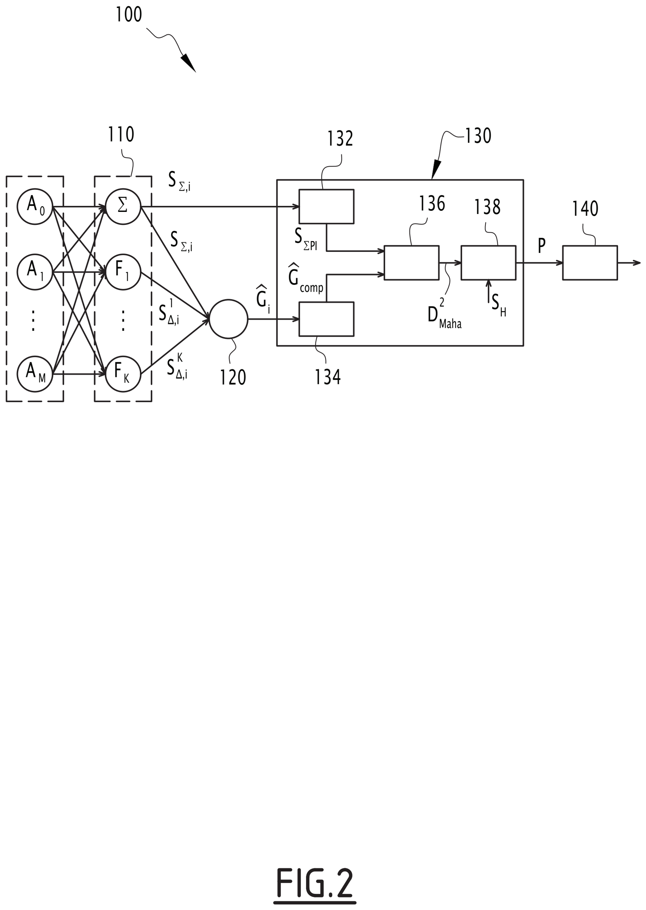

En se référant à la figure 2, un exemple particulier d'un traitement de détection TFAC hybride possible est donné.

On se place dans le cas d'un radar à balayage progressif.

L'antenne du système radar est subdivisée en M+1 sous-antennes.

Dans une étape 110 du procédé 100, le signal sur la voie somme $s_{\Sigma i}$ est obtenu à l'instant i en sommant les signaux reçus par chacune des sous-antennes.

Parallèlement, un ou plusieurs signaux sur la voie différence sont obtenus à l'instant i. Ils sont noté $s_{\Delta,i}^{k}$, avec k entier entre 1 et K.

Dans le cas où M est égal à 1, le signal sur la voie différence $s_{\Delta,i}$ est obtenu en faisant la différence entre les signaux reçus par la première sous-antenne et la seconde sous-antenne.

Dans le cas où M est supérieur à 2, on ne parle plus réellement de voie différence. On a M+1 sous-antennes fournissant M+1 signaux à l'instant i qu'il faut combiner d'une manière adaptée (fonctions sur la figure 2) pour obtenir K signaux « sur la voie différence » dans le but d'estimer, en combinaison avec le signal sur la voie somme, l'angle d'arrivée. Pour cela plusieurs techniques, connues de l'homme du métier, sont envisageables pour combiner les signaux fournis par les sous-antennes.

Il est à noter que, dans le cas d'une antenne à plus de deux voies, on dispose simplement de plus d'information pour estimer l'angle d'arrivée, qui reste une grandeur scalaire.

Dans une étape 120, un calcul d'écartométrie est réalisé. A partir du signal sur la voie somme $s_{\Sigma,i}$ et du ou des signaux sur la voie différence $s_{\Delta,i}^{k}$, un angle d'arrivée est estimé $\hat{G}_i$.

L'étape 130 suivante consiste à la mise en œuvre du traitement de détection hybride.

Un traitement possible est alors le suivant.

En supposant la présence d'une cible C visible sur la période d'observation $\Delta t$, on obtient une séquence temporelle $S_{\Sigma G}$ de signaux instantanés hybrides $S_{\Sigma G,i}$, chaque signal instantané hybride associant un signal instantané de voie somme $s_{\Sigma,i}(j)$ et un signal instantané d'écartométrie $\hat{G}_i(j)$, où i indexe une case selon la direction en récurrence (ou azimut ou temps) et j indexe une case selon la direction en distance.

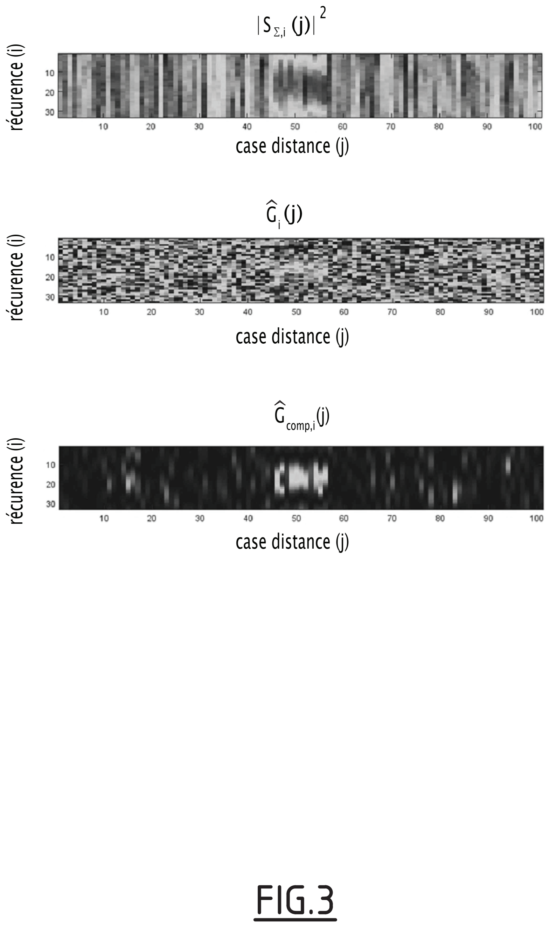

Sur la figure 3, une cible est présente au centre du domaine d'observation. L'image du haut correspond à l'entrée $s_{\Sigma,i}(j)$ et l'image du milieu à l'entrée $\hat{G}_i(j)$. On observe notamment que l'angle d'arrivée estimé évolue progressivement pour les récurrences au voisinage du centre de l'image.

Dans une première sous-étape de post-intégration - PI du signal sur la voie somme, 132, les signaux instantanés $s_{\Sigma i}$ sur la voie somme sont sommés quadratiquement selon l'axe temporel (i.e. l'indice i) :

$$S_{\Sigma PI,i}(j) = \frac{1}{N} \sum_{q=-\frac{N-1}{2}}^{\frac{N-1}{2}} \left| s_{\Sigma,i+q}(j) \right|^2$$

Avec $j$ l'indice de case distance et q un entier de sommation.

Le procédé 100 comporte une seconde sous-étape de filtrage du signal d'écartométrie 134.

Etant donné l'équation modélisant les angles d'arrivées $\hat{G}_i$ en présence d'une cible :

$$\hat{G}_i = Az_C - Az_0 - V_{Bal} \cdot \frac{i-1}{N-1} \cdot \Delta t + u_i$$

On montre que l'expression du filtre temporel $h$ adapté pour la recherche d'une cible d'azimut fixe sur la durée $\Delta t$ est la suivante :

$$h(i) = V_{Bal} \cdot \frac{i-1}{N-1} \cdot \Delta t$$

En supposant pour simplifier N impaire, l'angle d'arrivée dit compressé $\hat{G}_{comp,i}(j)$ (pour la case distance j et la récurrence i) à l'issue du filtrage est alors obtenu par convolution sur les récurrences adjacentes :

$$\hat{G}_{comp,i}(j) = \sum_{q=-\frac{N-1}{2}}^{\frac{N-1}{2}} \hat{G}_{i+q}(j).h(N-(i+q)+1)$$

L'image du bas de la figure 3 représente l'angle d'arrivée compressé $\hat{G}_{comp}$.

On observe que les échos au centre cette image apparaissent clairement au-dessus du bruit ambiant, illustrant l'intérêt de prendre en compte l'écartométrie dès le traitement de détection de cible.

Dans une troisième sous-étape de réduction de dimension, 136, les deux signaux compressés $S_{\Sigma PI}$ et $\hat{G}_{comp}$ sont combinés en une unique métrique scalaire :

$$D^2_{Maha,i}(j) = [S_{\Sigma PI,i}(j) \quad \hat{G}_{comp,i}(j)] \Sigma^{-1}_{TRT} \begin{bmatrix} S_{\Sigma PI,i}(j) \\ \hat{G}_{comp,i}(j) \end{bmatrix}$$

Avec $\Sigma_{TRT}$ une matrice de covariance dont les coefficients dépendent des choix de modélisation effectués. Cette métrique réalise une réduction de dimensionnalité.

Dans une quatrième sous-étape de comparaison 138, la valeur de $D^2_{Maha}$ obtenue en sortie de la sous-étape est comparée à un seuil de détection hybride $S_H$ correctement calculé pour respecter la $P_{fa}$ de contrainte.

Lorsque ce seuil est dépassé un plot P est généré en sortie de l'étape 132 de traitement TFAC hybride.

Le plot P est caractérisé par une information de position tridimensionnelle, avec une précision angulaire qui est celle de l'écartométrie et non plus celle de l'ouverture du lobe principal du faisceau radar.

Le procédé 100 est itéré. Il peut être itéré pour chaque récurrence i (mode « glissant », mode de réalisation préféré), ou par paquet de récurrences (mode « non-glissant »).

En aval de l'étape 130 de traitement TFAC hybride, le procédé 100 peut comporter une étape 140 d'habillage de plot, permettant d'utiliser les informations obtenues d'autres traitements pour compléter les informations du plot P. Cependant, selon l'invention, les sorties de l'étape d'écartométrie ne sont plus utilisées en entrée de l'étape d'habillage.

L'invention propose ainsi de dépasser les détecteurs TFAC classiques, s'appuyant sur la recherche des échos anormalement puissants, avec un détecteur TFAC hybride, s'appuyant sur la recherche des échos anormalement puissant et anormalement stables en angle d'arrivée sur un horizon temporel court très inférieur à la seconde ( $\Delta t << 1s$).

Si le mode de réalisation préféré a été présenté ci-dessus dans le cas du traitement d'un signal radar, le procédé de détection selon l'invention s'applique au traitement d'un signal sonar.

Il est à noter que, dans l'état de la technique on connait les procédés dits de « pistage avant détection » - TBD (« Track Before Detection) qui part du signal radar brut pour détecter une cible en mouvement. Un tel procédé prend en entrée la puissance du signal reçu. Dans certaines variantes de réalisation, il peut en outre prendre en entrée le signal d'écartométrie. Cependant, pour pouvoir détecter une cible, ce procédé échantillonne le signal sur un pas d'échantillonnage long, de l'ordre de la seconde, et observe sur un temps long, pendant plusieurs dizaines de secondes, justement pour pouvoir détecter le déplacement de la cible. Au contraire, le procédé selon l'invention, qui prend également en entrée la puissance du signal reçu et le signal d'écartométrie, fonctionne sur un pas d'échantillonnage court, de l'ordre de la milliseconde, et observe pendant un temps court, quelques dizaines de millisecondes et au maximum une centaine de millisecondes. Ce temps d'observation court permet de considérer la cible comme immobile.

De plus, en tant que procédé de détection, le procédé TFAC hybride selon l'invention délivre des détections ou plots P.

Au contraire un procédé TBD délivre des pistes.

## Revendications

**1.** Procédé (100), mis en œuvre par ordinateur, de détection de cible (C) du type à taux de fausse alarme constant - TFAC pour un système de détection multivoies, le procédé, en considérant une période d'observation suffisamment courte pour que toute cible puisse être considérée comme immobile, mettant en œuvre, pour chaque pas d'échantillonnage (j) selon une direction en distance (D) du système de détection multivoies, un test de détection sur une séquence de signaux hybrides selon une direction en récurrence du système de détection multivoies, la séquence de signaux hybrides couvrant la période d'observation et chaque signal hybride ($S_{\Sigma G}$) associant un signal de voie somme ($s_{\Sigma,i}$) et un signal d'écartométrie ($\hat{G}_i$) pour chaque pas d'échantillonnage (i) selon la direction en récurrence, le procédé générant une détection de cible lorsque le test de détection est vérifié,

le procédé étant **caractérisé en ce que** le test de détection correspond à un test optimal $T_{\Sigma G}$, le test optimal s'écrivant :

$$T_{\Sigma G} : \frac{\mathcal{L}(S_{\Sigma G}|H_0)}{\mathcal{L}(S_{\Sigma G}|H_1)} \gtreqless S_H$$

avec $\mathcal{L}$ une fonction de vraisemblance de la séquence $S_{\Sigma G}$ temporelle de signaux instantanés hybrides *soit* sous l'hypothèse $H_0$ de présence d'une cible C soit sous l'hypothèse $H_1$ d'absence de cible, et $S_H$ un seuil de détection hybride, le procédé conduisant la génération d'une détection, ou plot, lorsque le test de détection est vérifié, le seuil de détection hybride étant calculé pour respecter une probabilité de fausse alarme de contrainte, et **en ce qu'**il comporte, pour le cas d'un système de détection multivoies à balayage, une étape de filtrage (134) permettant de calculer un angle d'arrivée compressé $\hat{G}_{comp}$ à partir du signal d'écartométrie $\hat{G}_{\square}$ selon la relation :

$$\hat{G}_{comp,i}(j) = \sum_{q=-\frac{N-1}{2}}^{\frac{N-1}{2}} \hat{G}_{i+q}(j).h(N-(i+q)+1)$$

avec $h$ un filtre temporel adapté pour la recherche d'une cible fixe sur une durée de passage d'un lobe principal d'une antenne du système de détection multivoies sur la cible, N le nombre de signaux hybrides dans la séquence, i un indice de pas d'échantillonnage selon la direction en récurrence, j un indice de pas d'échantillonnage selon la direction en distance, et q un indice entier de sommation.

2. Procédé selon la revendication 1, comportant une étape de post intégration (132) du signal de voie somme $s_\Sigma$ pour obtenir un signal de voie somme compressé $S_{\Sigma PI}$ :

$$S_{\Sigma PI,i}(j) = \frac{1}{N} \sum_{q=-\frac{N-1}{2}}^{\frac{N-1}{2}} \left| s_{\Sigma,i+q}(j) \right|^2$$

Avec N le nombre de signaux hybrides dans la séquence, i un indice de pas d'échantillonnage selon la direction en récurrence, j un indice de pas d'échantillonnage selon la direction en distance, et q un indice entier de sommation.

3. Procédé selon la revendication 2, comportant une étape de réduction de dimension (136) permettant de combiner le signal de voie somme compressé $S_{\Sigma PI}$ et le signal d'écartométrie compressé $\hat{G}_{comp}$ selon une métrique prédéfinie pour obtenir une valeur scalaire, et une étape de comparaison de la valeur scalaire au seuil de détection hybride $S_H$.

4. Procédé selon la revendication 3, dans lequel la métrique $D^2_{Maha}$ est définie par :

$$D^2_{Maha,i}(j) = \begin{bmatrix} S_{\Sigma PI,i}(j) & \hat{G}_{comp,i}(j) \end{bmatrix} \Sigma^{-1}_{TRT} \begin{bmatrix} S_{\Sigma PI,i}(j) \\ \hat{G}_{comp,i}(j) \end{bmatrix}$$

avec $\Sigma_{TRT}$ une matrice de covariance,

5. Procédé selon l'une quelconque des revendications précédentes, dans lequel le procédé permet de rechercher des échos anormalement puissants et anormalement stables en angle d'arrivée sur une période d'observation courte, inférieure à la seconde, de préférence égale à 10ms, et un pas d'échantillonnage court, inférieur à la dizaine de millisecondes, de préférence égal à 1ms.

6. Système de détection multivoies intégrant un ordinateur programmé pour l'exécution des étapes du procédé selon l'une quelconque des revendications 1 à 5.

7.  Système selon la revendication 6, le système étant du type radar ou du type sonar.

8.  Programme d'ordinateur comprenant des instructions de code de programme pour l'exécution des étapes du procédé selon l'une quelconque des revendications 1 à 6 lorsque ledit programme est exécuté sur un ordinateur d'un système de détection multivoies selon la revendication 6 ou la revendication 7.

FIG.1

## FIG.2

$$|S_{\Sigma,i}(j)|^2$$

$$\widehat{G}_i(j)$$

$$\widehat{G}_{comp,i}(j)$$

FIG.3

Europäisches
Patentamt

European
Patent Office

Office européen
des brevets

**RAPPORT DE RECHERCHE EUROPEENNE**

Numéro de la demande

EP 25 22 0125

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2010/066597 A1 (TYREE ANTHONY K [US] ET AL) 18 mars 2010 (2010-03-18) * abrégé; revendication 1; figures 1,3 * * alinéas [0005], [0043], [0046] * | 1-8 | INV. G01S13/44 G01S7/292 G01S13/524 |
| A | CN 109 471 093 A (NAT UNIV DEFENSE TECHNOLOGY PLA) 15 mars 2019 (2019-03-15) * abrégé; revendication 1; figure 1 * * alinéas [0005], [0006], [0046], [0047] * | 1-8 | |
| A | ARMSTRONG B C ET AL: "USE OF DIFFERENCE CHANNEL INFORMATION FOR DETECTION IN MONOPULSE RADARS", IEE PROCEEDINGS F RADAR AND SIGNAL PROCESSING, INSTITUTION OF ELECTRICAL ENGINEERS, vol. 138, no. 3 PART F, 1 juin 1991 (1991-06-01), pages 199-210, XP000231092, ISSN: 0956-375X * abrégé * * page 199, colonne de droite, lignes 1-18 * * page 208, colonne de droite, lignes 6-44 * | 1-8 | **DOMAINES TECHNIQUES RECHERCHES (IPC)** G01S |

Le présent rapport a été établi pour toutes les revendications

| Lieu de la recherche | Date d'achèvement de la recherche | Examinateur |
|---|---|---|
| Munich | 24 mars 2026 | Mercier, Francois |

## ANNEXE AU RAPPORT DE RECHERCHE EUROPEENNE
## RELATIF A LA DEMANDE DE BREVET EUROPEEN NO.

EP 25 22 0125

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-03-2026

| Document brevet cité au rapport de recherche | Date de publication | Membre(s) de la famille de brevet(s) | Date de publication |
|---|---|---|---|
| US 2010066597 A1 | 18-03-2010 | EP 2326967 A1 | 01-06-2011 |
| | | JP 5551169 B2 | 16-07-2014 |
| | | JP 2012503198 A | 02-02-2012 |
| | | US 2010066597 A1 | 18-03-2010 |
| | | WO 2010033372 A1 | 25-03-2010 |
| CN 109471093 A | 15-03-2019 | AUCUN | |

Pour tout renseignement concernant cette annexe : voir Journal Officiel de l'Office européen des brevets, No.12/82

EPO FORM P0460

## RÉFÉRENCES CITÉES DANS LA DESCRIPTION

**Documents brevets cités dans la description**

- US 2010066597 A1